# EUROPEAN PATENT APPLICATION

(11) **EP 1 542 257 A1**
(43) Date of publication of application: **15.06.2005**
(21) Application number: 03741189.9
(22) Date of filing: 03.07.2003
(51) Int. Cl.: H01J 9/24

(54) **METHOD OF PRODUCING SPACER STRUCTURE BODY, METHOD OF FILLING SPACER FORMING MATERIAL, DEVICE FOR FILLING SPACER FORMING MATERIAL, FORMING DIE, AND VACUUM VESSEL**

(30) Priority: 24.07.2002 JP 2002215443; 04.12.2002 JP 2002352750; 26.02.2003 JP 2003049051
(71) Applicant: Kabushiki Kaisha Toshiba, Minato-ku, Tokyo 105 (JP)
(72) Inventor: HIROSAWA, Daiji, c/o Intellectual Property Div., Minato-ku, Tokyo 105-8001 (JP); UEDA, Yukinori, c/o Intellectual Property Div., Minato-ku, Tokyo 105-8001 (JP); TAKATORI, Koji, c/o Intellectual Property Div., Minato-ku, Tokyo 105-8001 (JP); NIKAIDO, Masaru, c/o Intellectual Property Div., Minato-ku, Toko 105-8001 (JP); ISHIKAWA, Satoshi, c/o Intellectual Property Div., Minato-ku, Tokyo 105-8001 (JP); HIRAHARA, Sachiko, c/o Intellectual Property Div., Minato-ku, Tokyo 105-8001 (JP)
(74) Representative: HOFFMANN - EITLE
(86) International application number: PCT/JP2003/008498
(87) International publication number: WO 2004/010453

(57) **Abstract**

A plate-like grid (24) having a plurality of beam apertures (26) and a plate-like molding tool (36a) are prepared. The molding tool has spacer forming holes (40a) and hole forming portions (56a) which are situated individually around the spacer forming holes to define the spacer forming holes and are formed of a UV transmitting material. The molding tool is brought in contact with a surface of the grid, whereby an assembly composed of the molding tool and the grid is formed. An ultraviolet-curing spacer forming material (46) is filled into the spacer forming holes of the molding tool before or after the formation of the assembly. Ultraviolet rays are applied to the filled spacer forming material directly or through the hole forming portions, whereby the spacer forming material is cured. Thereafter, the molding tool is separated from the grid with the cured spacer forming material left on the grid.

## Description

### Technical Field

This invention relates to a method of manufacturing a spacer assembly used in an image display device such as a flat display device, a filling method for a spacer forming material used in the manufacture of the spacer assembly, a filling device for the spacer forming material, a molding tool, and a vacuum vessel.

### Background Art

In recent years, various image flat display devices have been watched as a next generation of lightweight, thin display devices to replace cathode-ray tubes (hereinafter referred to as CRTs). For example, a surface-conduction electron emission display (hereinafter referred to as an SED) has been developed as a kind of a field emission display (hereinafter referred to as an FED) that functions as a flat display device.

The SED comprises a front substrate and a rear substrate that are opposed to each other with a given gap between them. These substrates have their respective peripheral portions joined together by means of a rectangular sidewall, thereby constituting a vacuum envelope. Phosphor layers of three colors are formed on the inner surface of the front substrate, and a large number of electron emitting elements corresponding to individual pixels are arranged on the inner surface of the rear substrate and serve as electron emitting sources that excite the phosphors to luminescence. Each electron emitting element is formed of an electron emitting portion (not shown), a pair of electrodes that apply voltage to the electron emitting portion, etc.

In the SED described above, it is important to keep the space between the front substrate and the rear substrate, that is, the interior of the vacuum envelope, at a high degree of vacuum. If the degree of vacuum is low, the life of the electron emitting elements, and therefore, the life of the device, will inevitably shorten. Since a vacuum is kept between the front substrate and the rear substrate, moreover, the atmospheric pressure acts on the front and rear substrates. In order to support the atmospheric pressure load that acts on these substrates and maintain the gap between the substrates, therefore, a large number of plate-like or columnar spacers are arranged between the two substrates.

In order to arrange the spacers over the whole surfaces of the front substrate and the rear substrate, very thin plate-like or columnar spacers are required lest they touch the phosphors on the front substrate and the electron emitting elements on the rear substrate. Since these spacers must inevitably be set very close to the electron emitting elements, moreover, an insulator material must be used for the spacers. At the same time, the reduction in thickness of the front substrate and the rear substrate requires an increased number of spacers, so that manufacture becomes more difficult.

The spacers may possibly be aligned with regions between the front substrate and the phosphors and between the rear substrate and the electron emitting elements by the following alternative methods. In one method, the spacers are attached directly to the regions between the phosphors or between the electron emitting elements. In the other method, a large number of spacers are formed with high positional accuracy on both surfaces of a metal plate previously formed having holes through which electrons pass, and the spacers on the metal plate are aligned with the front substrate or the rear substrate.

As an example of the latter method, a manufacturing method is described in Jpn. Pat. Appln. KOKAI Publication No. 2001-272926 or 2001-272927. According to this method, two molding tools in which a large number of holes corresponding individually to spacer shapes are adhered to the obverse and reverse surfaces of a metal plate, and through holes for spacer formation are defined by the metal plate and the two molding tools. In this state, a pasty photo-setting or thermosetting spacer forming material is filed into the through holes. After the filled spacer forming material is then cured optically or thermally in the dies, the two dies are removed from the metal plate, and moreover, the spacer forming material is vitrified. By doing this, the columnar spacers that are formed integrally on the metal plate are supposed to be obtained.

In the case where the spacer forming material is cured by the method described above, influences of heat can be removed to provide advantages in accuracy and manufacturing cost if it is irradiated with ultraviolet rays only. However, spacer forming holes in the molding tools are narrow and deep. If the molding tools used are formed of a metallic material, therefore, it is hard to allow sufficient ultraviolet rays for curing the spacer forming material to reach the depth of the molding tools. Thus, the spacer forming material used is a thermosetting material or a material that has a subsidiary thermosetting property as well as an ultraviolet-curing property.

When the spacer forming material is thermally cured, moreover, a difference in temperature distribution is caused between the grid and the molding tools by heating and cooling, so that dislocation occurs on an interface between the grid and the molding tools. This dislocation is liable to cause breakage of the spacers.

If the respective thermal expansion coefficients and temperatures of the materials of the grid and the molding tools are strictly controlled, quick heating and cooling are very difficult, so that it is hard to increase the productivity. To cope with this, the molding tools may possibly be formed of a UV transmitting material. Since glass or resin is a general UV transmitting material, however, its mechanical stiffness and abrasion resistance are too low to be used for molding tools. Possibly, therefore, breakage of the molding tools, accuracy failure, and other problems may be caused.

In the manufacturing method described above, the spacer forming material can be filled relatively easily into the spacer forming holes of the molding tools if the spacer forming holes are through holes. If the spacer forming holes are through holes, however, the height accuracy of the finally formed spacers is not stable, owing to variation in the amount of fill. Since the thickness of the molding tools must be made equal to the spacer height, moreover, it is hard to improve the mechanical strength by thickening the molding tools. At the same time, the material used for the molding tools is subjected to restrictions.

If the spacer forming holes of the molding tools are bottomed holes having a fine shape, there is no way of escape for air in the holes, so that it is very hard to fill the spacer forming material. Possibly, the spacer forming holes may be evacuated in advance. This method is not very favorable, however, since a solvent mixed in the spacer forming material inevitably evaporates.

Unless the metal plate and the molding tools are fully intimately in contact with one another when the spacer forming material is filled into the molding tools, the spacer forming material unfavorably penetrates between the metal plate and the molding tools. In this case, spacers of normal shapes cannot be formed, and besides, beam apertures that are previously formed in the metal plate may possibly be blocked. Since overruns of the spacer forming material act as an adhesive, moreover, a problem arises that separation of the metal plate and the molding tools is very difficult.

Since the metal plate and the molding tools are in the form of a thin plate each, furthermore, it is hard for them to obtain satisfactory flatness for intimate contact in advance. In filling the spacer forming material into the molding tools, therefore, the molding tools and the grid must be held in a large number of positions, to be kept intimately in contact with one another. In this case, a large number of holding members must be provided, and they require high holding pressure and hence, use of a large, complicated manufacturing apparatus. If ultraviolet curing is selected as a spacer forming material curing process or the next stage, moreover, the holding members inevitably hinder ultraviolet irradiation.

### Disclosure of Invention

This invention has been made in consideration of these circumstances, and its object is to provide a method of manufacturing a spacer assembly capable of manufacturing spacers with high accuracy, a filling method for a spacer forming material used in the manufacture of the spacer assembly, a filling device for the spacer forming material, a molding tool, and a vacuum vessel.

In order to achieve the above object, according to an aspect of the invention, there is provided a method of manufacturing a spacer assembly, which comprises a plate-like grid having a plurality of beam apertures and a plurality of columnar spacers set up integrally on a surface of the grid and is used in an image display device, the method comprising: preparing the plate-like grid having a plurality of beam apertures; preparing a plate-like molding tool having a plurality of spacer forming holes and a plurality of hole forming portions situated individually around the spacer forming holes to define the spacer forming holes and formed of a UV transmitting material; contacting the molding tool to the surface of the grid, thereby forming an assembly composed of the molding tool and the grid; filling an ultraviolet-curing spacer forming material into the spacer forming holes of the molding tool before or after the formation of the assembly; applying ultraviolet rays to the filled spacer forming material directly or through the hole forming portions, thereby curing the spacer forming material; and separating the molding tool from the grid with the cured spacer forming material left on the grid.

According to another aspect of the invention, there is provided a method of manufacturing a spacer assembly, which comprises a plate-like grid having a plurality of beam apertures and a plurality of columnar spacers set up integrally on a surface of the grid and is used in an image display device, the method comprising: preparing the plate-like grid having the plurality of beam apertures; preparing a plate-like molding tool having a plurality of spacer forming holes and a plurality of hole forming portions situated individually around the spacer forming holes to define the spacer forming holes and formed of an elastic material; contacting the molding tool to the surface of the grid, thereby forming an assembly composed of the molding tool and the grid; filling a thermosetting spacer forming material into the spacer forming holes of the molding tool before or after the formation of the assembly; curing the filled spacer forming material in the assembly by heating; and separating the molding tool from the grid with the cured spacer forming material left on the grid.

According to another aspect of the invention, there is provided a molding tool used in the method of manufacturing a spacer assembly, the molding tool comprising: a plate-like die body; and a plurality of hole forming portions each formed of a UV transmitting material, defining the spacer forming holes, and provided integrally with the die body.

According to the method of manufacturing a spacer assembly and the molding tool arranged in this manner, the UV transmitting material is used for peripheral portions around the spacer forming holes, so that the spacer forming material that can be cured by ultraviolet rays only can be used. Further, a material with high mechanical strength, such as metal, can be used for the part other than the regions around the spacer forming holes, so that necessary mechanical strength for the molding tool can be fully secured. By using the elastic material for the peripheral portions around the respective opening portions of the spacer forming holes, moreover, breakage of the spacers attributable to dislocation between the grid and the molding tool can be prevented, and quick heating and cooling can be effected for thermal curing.

Thus, a spacer assembly manufacturing method and a molding tool can be obtained that can manufacture spacers with high accuracy without breaking the spacers. In the manufacture of the spacer assembly, moreover, the process for thermal curing may be omitted or time for the thermal curing process may be shortened to improve the productivity.

According to still another aspect of the invention, there is provided a filling method for a spacer forming material for filling the spacer forming material into a plurality of bottomed spacer forming holes of a molding tool which has a contact surface and the spacer forming holes opening in the contact surface, the filling method comprising: supplying a pasty spacer forming material to spacer forming hole portions of the molding tool; and rotating the molding tool supplied with the spacer forming material around a rotation axis situated off the molding tool so that air in the spacer forming holes is replaced with the spacer forming material by a centrifugal force, thereby filling the spacer forming holes with the spacer forming material.

According to another aspect of the invention, there is provided a method of manufacturing a spacer assembly, which comprises a plate-like member and a plurality of columnar spacers set up integrally on a surface of the plate-like member and is used in an image display device, the method comprising: preparing a molding tool having a contact surface and a plurality of bottomed spacer forming holes opening in the contact surface; supplying a pasty spacer forming material to spacer forming hole portions of the molding tool; rotating the molding tool supplied with the spacer forming material around a rotation axis situated off the molding tool so that air in the spacer forming holes is replaced with the spacer forming material by centrifugal force, thereby filling the spacer forming holes with the spacer forming material; holding the molding tool with the spacer forming holes filled with the spacer forming material in a manner such that the contact surface is intimately in contact with the surface of the plate-like member; and curing the spacer forming material with the molding tool and the plate-like member intimately in contact with each other, thereby forming a plurality of spacers on the surface of the plate-like member.

According to another aspect of the invention, there is provided a filling device for a spacer forming material, which fills the spacer forming material into a plurality of bottomed spacer forming holes of a molding tool which has a contact surface and the spacer forming holes opening in the contact surface, comprising: a rotor provided for rotation around a central axis; a rotating mechanism which rotates the rotor around the rotation axis; a support member which is provided on the roller and supports the molding tool so that the contact surface of the molding tool faces the rotation axis and that the molding tool is situated off the rotation axis.

According to the spacer forming material filling method, spacer assembly manufacturing method, and filling device arranged in this manner, the molding tool is rotated after the spacer forming material is attached to the outside of the spacer forming holes of the molding tool, and air in the spacer forming holes is replaced with the spacer forming material by a centrifugal force. By doing this, the fine spacer forming holes can be securely filled with the spacer forming material.

According to another aspect of the invention, there is provided a method of manufacturing a spacer assembly, which comprises a plate-like grid having a plurality of beam apertures and a plurality of columnar spacers set up on a surface of the grid and is used in an image display device, the method comprising: preparing the plate-like grid having the plurality of beam apertures; preparing a plate-like molding tool having a plurality of spacer forming holes situated in positions corresponding to regions between the beam apertures of the grid; filling a spacer forming material into the spacer forming holes of the molding tool; contacting the molding tool filled with the spacer forming material to the surface of the grid in a manner such that the spacer forming holes face the regions between the beam apertures of the grid, thereby forming an assembly composed of the molding tool and the grid; locating the assembly in an elastically deformable, flat vacuum vessel; and evacuating the vacuum vessel so that the molding tool and the grid are kept intimately in contact with each other under the atmospheric pressure.

According to another aspect of the invention, there is provided a vacuum vessel used in the method of manufacturing a spacer assembly, comprising: a first main wall and a second main wall each in the form of a plate arranged adjacent and opposite to the assembly, the first and second main walls being formed of an elastic material which can be elastically deformed along the assembly to adhere to the assembly when the vacuum vessel is evacuated.

According to the spacer assembly manufacturing method and the vacuum vessel arranged in this manner, the assembly is formed by adhering the molding tool to the surface of the grid, the assembly is located in the elastically deformable, flat vacuum vessel, and the vacuum vessel is evacuated. Then, the vacuum vessel is pressed against the assembly to be elastically deformed under the atmospheric pressure that acts on the vacuum vessel, whereby a pressure that brings the grid and the molding tool intimately into contact with each other is generated. Thus, the grid and the molding tool can be kept in an extremely intimate contact state, so that the spacer forming material that is filled in the molding tool can be securely prevented from leaking out between the molding tool and the grid. Further, it is unnecessary to arrange a large number of holding members and apply a high holding pressure to each holding member, so that manufacturing processes can be simplified, and the vacuum vessel can be miniaturized and simplified.

### Brief Description of Drawings

FIG. 1 is a perspective view showing an SED provided with a spacer assembly according to an embodiment of this invention;
FIG. 2 is a perspective view of the SED, partially in section along line II-II of FIG. 1;
FIG. 3 is a sectional view enlargedly showing the SED;
FIG. 4 is a perspective view showing the spacer assembly;
FIG. 5 is a sectional view showing a manufacturing process for the spacer assembly;
FIG. 6 is a sectional view enlargedly showing a part of the manufacturing process;
FIGS. 7A to 7E are sectional views showing manufacturing processes for a molding tool used in the manufacture of the spacer assembly;
FIG. 8 is a sectional view showing a process for applying ultraviolet rays to an assembly, out of the aforesaid spacer assembly manufacturing processes;
FIG. 9 is a sectional view showing a process for releasing the molding tool, out of the aforesaid spacer assembly manufacturing processes;
FIG. 10 is a sectional view showing an SED manufactured by a manufacturing method according to a second embodiment of this invention;
FIG. 11 is a sectional view showing a manufacturing process for a spacer assembly according to the second embodiment;
FIG. 12 is a perspective view showing a molding tool used in the manufacture of the spacer assembly;

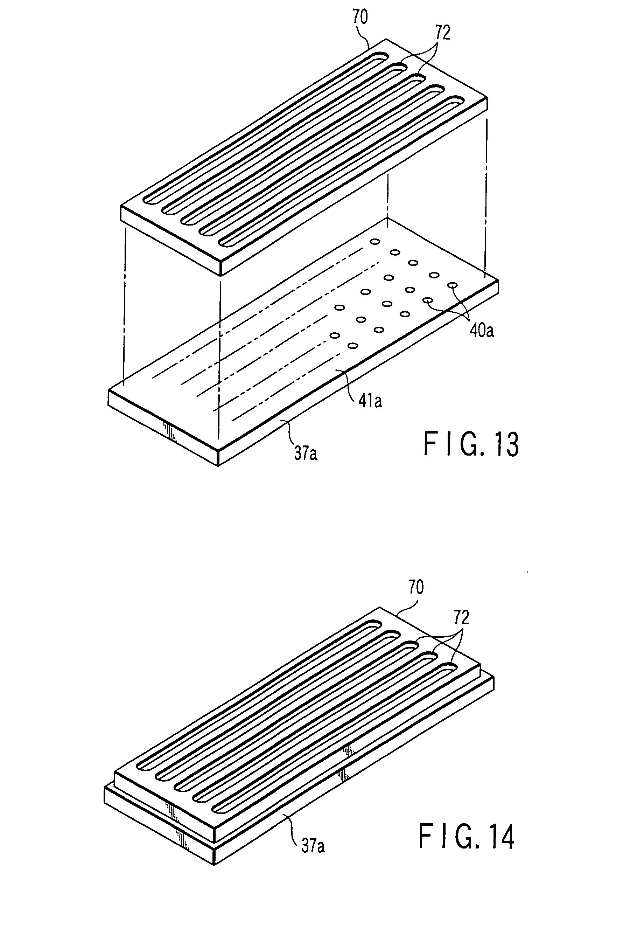

FIG. 13 is an exploded perspective view showing a divided piece of the molding tool and a partition plate;
FIG. 14 is a perspective view showing the divided piece fitted with the partition plate;
FIG. 15 is a perspective view showing a filling device for filling a spacer forming material into the molding tool;
FIG. 16 is a sectional view taken along line XVI-XVI of FIG. 15;
FIG. 17 is a sectional view corresponding to FIG. 16 and showing the molding tool filled with the spacer forming material;
FIG. 18 is a sectional view showing a process for scraping off the spacer forming material with a squeegee;
FIG. 19 is a sectional view showing an assembly formed by adhering the molding tool and a grid to each other;
FIG. 20 is a sectional view showing a vacuum vessel and a manufacturing process for the spacer assembly;
FIG. 21 is a sectional view showing a released state of the molding tool; and
FIG. 22 is a perspective view showing a filling device according to a third embodiment of this invention.

### Best Mode for Carrying Out the Invention

A manufacturing method for a spacer assembly and a molding tool according to embodiments of this invention will now be described in detail with reference to the drawings. First, an SED will be described as an example of an image display device provided with a spacer assembly that is manufactured by using the manufacturing method and the molding tool.

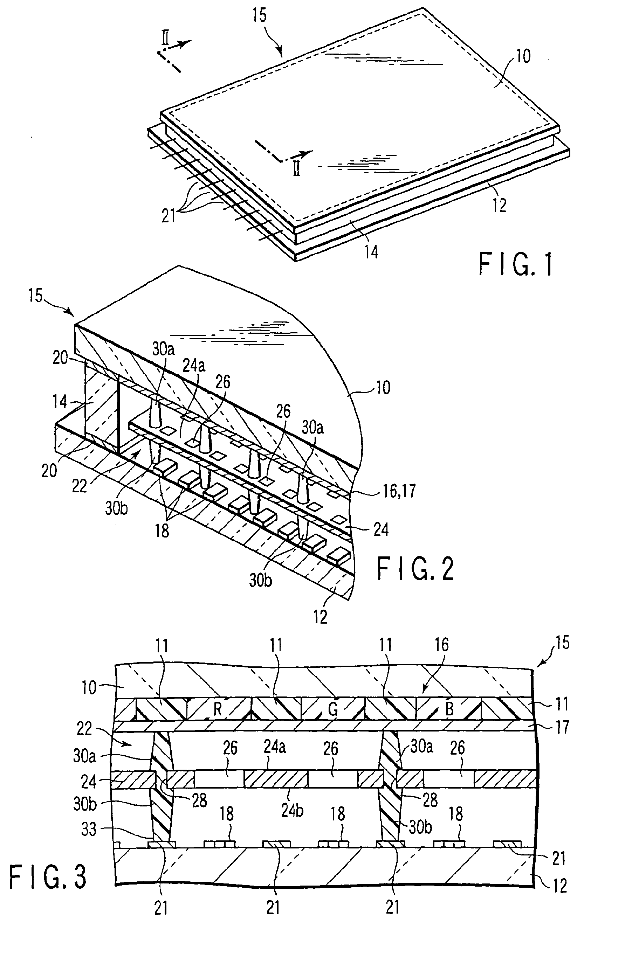

As shown in FIGS. 1 to 3, the SED comprises a front substrate 10 and a rear substrate 12, which are formed of a rectangular glass each. These substrates are opposed to each other with a gap of about 1.0 to 2.0 mm between them. The front substrate 10 and the rear substrate 12 have their respective peripheral edge portions joined together by a rectangular sidewall 14 of glass, and constitute a flat vacuum envelope 15 in which a vacuum is kept.

A phosphor screen 16 that serves as an image display surface is formed on the inner surface of the front substrate 10. The phosphor screen 16 is formed by arranging phosphor layers R, G and B and a black light shielding layer 11. These phosphor layers are in the form of stripes or dots. A metal back 17 of aluminum or the like is formed on the phosphor screen 16.

A large number of surface-conduction electron emitting elements 18 are provided on the inner surface of the rear substrate 12. They individually emit electron beams as electron sources that excite the phosphor layers of the phosphor screen 16. These electron emitting elements 18 are arranged in a plurality of columns and a plurality of rows corresponding to individual pixels. Each electron emitting element 18 is formed of an electron emitting portion (not shown), a pair of element electrodes that apply voltage to the electron emitting portion, etc. A large number of wires 21 that supply potential to the electron emitting elements 18 are formed in a matrix on the inner surface of the rear substrate 12, and their respective end portions are drawn out of the vacuum envelope 15.

The sidewall 14 that serves as a joining member is sealed to the respective peripheral edge portions of the front substrate 10 and the rear substrate 12 with a sealant 20 of, for example, low-melting glass or low-melting metal, and joins these substrates together.

As shown in FIGS. 2 to 4, the SED comprises a spacer assembly 22 that is located between the front substrate 10 and the rear substrate 12. In the present embodiment, the spacer assembly 22 is composed of a grid 24 in the form of a rectangular metal plate and a large number of columnar spacers that are set up integrally on the opposite sides of the grid.

More specifically, the grid 24 has a first surface 24a opposed to the inner surface of the front substrate 10 and a second surface 24b opposed to the inner surface of the rear substrate 12, and is located extending parallel to these substrates. A large number of electron beam apertures 26 and a plurality of spacer openings 28 are formed in the grid 24 by etching or the like. The electron beam apertures 26 are arranged opposite the electron emitting elements 18, individually, and transmit the electron beams emitted from the electron emitting elements. The spacer openings 28 are situated individually between the electron beam apertures 26 and arranged at a given pitch. Each spacer opening 28 is in the form of a circle having a diameter of about 0.2 to 0.5 mm, for example.

The grid 24 is formed of a plate of iron-nickel metal with a thickness of 0.1 to 0.25 mm, for example. An oxide film of the elements that constitutes the metal plate, e.g., Fe₃O₄ and NiFe₃O₄, is formed on the surface of the grid.

First spacers 30a are set up integrally on the first surface 24a of the grid 24 so as to overlap the spacer openings 28, individually. Their respective extended ends abut against the inner surface of the front substrate 10 with the interposition of the metal back 17 and the light shielding layer 11 of the phosphor screen 16. Second spacers 30b are set up integrally on the second surface 24b of the grid 24 so as to overlap the spacer openings 28, individually. Their respective extended ends abut against the inner surface of the rear substrate 12. The extended ends of the second spacers 30b are situated individually on the wires 21 that are arranged on the inner surface of the rear substrate 12.

Each of the first and second spacers 30a and 30b is tapered so that its diameter is reduced from the side of the grid 24 toward its extended end. For example, the diameter of the proximal end of each first spacer 30a that is situated on the side of the grid 24 is about 0.4 mm, the diameter of its extended end is about 0.3 mm, and its height is about 0.6 mm. Further, the diameter of the proximal end of each second spacer 30b that is situated on the side of the grid 24 is about 0.4 mm, the diameter of its extended end is about 0.25 mm, and its height is about 0.8 mm. Thus, both the diameters of the respective proximal ends of the first and second spacers 30a are set to be greater than the diameter of each spacer opening 28.

The first and second spacers 30a and 30b are arranged individually at given spaces so as to cover the whole area of each surface of the grid 24. The spacer openings 28 and the first and second spacers 30a and 30b are situated in alignment with one another, and the first and second spacers are coupled integrally to one another through the spacer openings 28. Thus, the first and second spacers 30a and 30b are formed integrally with the grid 24 so as to hold the grid 24 between them from both sides.

The spacer assembly 22 constructed in this manner is located between the front substrate 10 and the rear substrate 12. The first and second spacers 30a and 30b abut against the respective inner surfaces of the front substrate 10 and the rear substrate 12, thereby supporting the atmospheric load that acts on these substrates and keeping the distance between the substrates at a given value.

The SED is provided with a voltage supply unit (not shown) that applies voltages to the grid 24 and the metal back 17 of the front substrate 10. For example, voltages of 12 kV and 10 kV are applied to the grid 24 and the metal back 17, respectively.

In displaying an image on the SED described above, the electron emitting elements 18 are actuated through the wires 21 so that electron beams are emitted from any of the electron emitting elements, and an anode voltage is applied to the phosphor screen 16 and the metal back 17. The electron beams emitted from the electron emitting elements 18 are accelerated by the anode voltage. After passing through the electron beam apertures 26 of the grid 24, they hit the phosphor screen 16. Thereupon, the phosphor layers of the phosphor screen 16 are excited to glow, and the image is displayed.

The following is a description of a manufacturing method for the SED constructed in this manner. The molding tool and a manufacturing method for manufacturing the spacer assembly 22 will be described first.

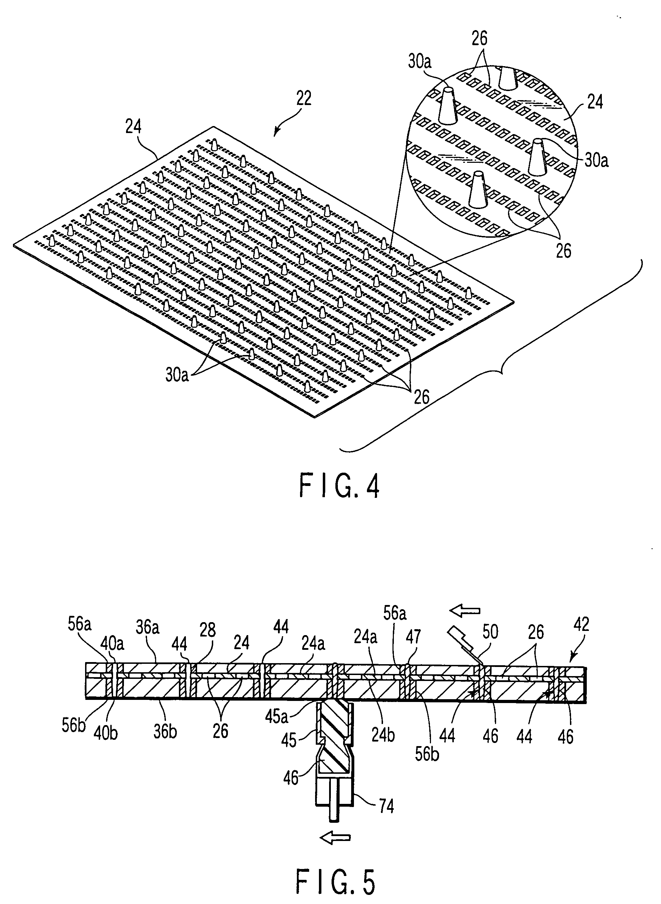

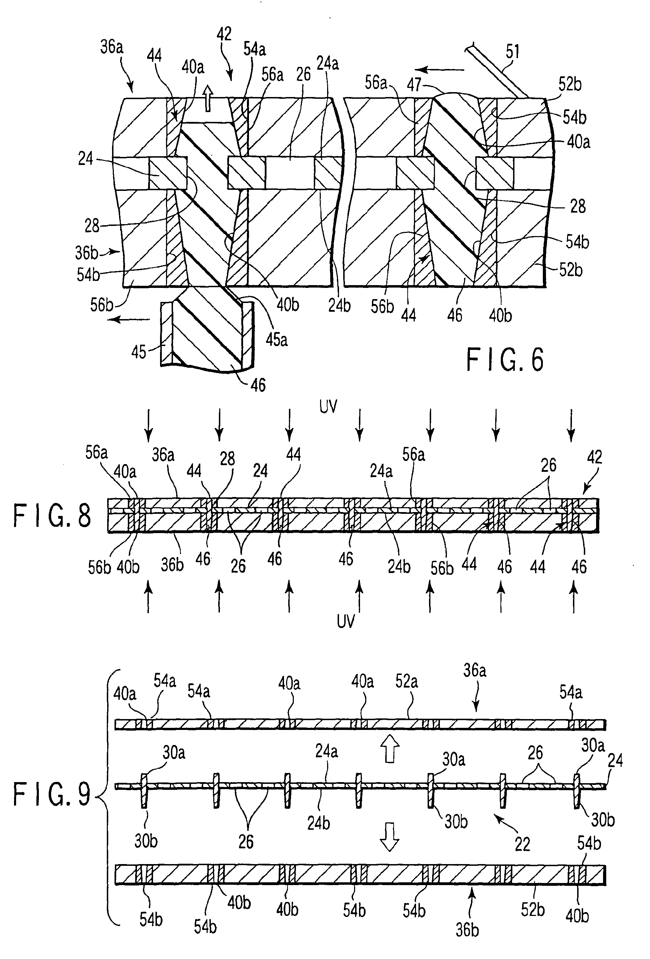

As shown in FIGS. 5 and 6, the grid 24 of a given size and upper and lower dies 36a and 36b, each in the form of a rectangular plate having substantially the same size as the grid, are prepared first. After a metal plate of Fe-50% Ni with a thickness of 0.12 mm is degreased, washed, and dried, the electron beam apertures 26 and the spacer openings 28 are formed by etching to prepare the grid 24. After the whole grid 24 is oxidation-treated, thereafter, an insulating film is formed on the grid surface including the respective inner surfaces of the electron beam apertures 26 and the spacer openings 28.

The upper die 36a has a large number of spacer forming holes 40a for molding the first spacers 30a. These spacer forming holes 40a are arranged corresponding individually to the spacer openings 28 of the grid 24. The lower die 36b has a large number of spacer forming holes 40b for molding the second spacers 30b. These spacer forming holes 40b are arranged corresponding individually to the spacer openings 28 of the grid 24.

The following is a detailed description of the respective configurations of the upper die 36a and the lower die 36b and a manufacturing method therefor, taking the upper die 36a as a representative.

As shown in FIG. 6, the upper die 36a for use as a molding tool is provided with a die body 52a that is formed of a rectangular plate of stainless steel or polyethylene terephthalate. The die body 52a is formed having a large number of through holes 54a corresponding individually to the spacer openings 28 of the grid 24. Each through hole 54a has a diameter larger than that of each spacer forming hole. Each through hole 54a has therein a hole forming portion 56a of, for example, silicone, which serves both as a UV transmitting material and as an elastic material. This hole forming portion 56a is formed having the spacer forming hole 40a of the shape corresponding to each first spacer 30a. Thus, the spacer forming hole 40a is surrounded by silicone.

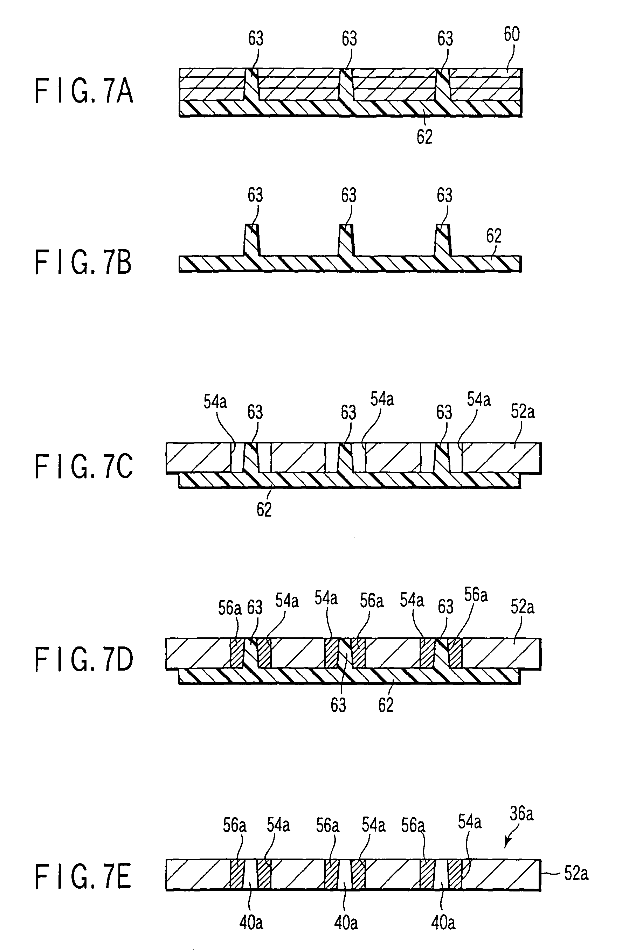

In manufacturing the upper die 36a, a master female die 60 that is formed having a large number of spacer forming holes with high accuracy is prepared first, as shown in FIG. 7A. The master female die 60 is formed by laminating a plurality of metal plates, e.g., three in number, to one another. Through holes that constitute the spacer forming holes are formed in each metal plate with high accuracy by laser etching or the like. Subsequently, a spacer forming material such as silicone is filled into the master female die 60 through the large-diameter side of the spacer forming holes to form a master male die 62 that has a large number of protrusions 63 corresponding to the spacer forming holes, individually, as shown in FIGS. 7A and 7B.

Then, the die body 52a that is formed having the large number of through holes 54a is prepared, as shown in FIG. 7C. The master male die 62 is attached to the die body 52a and aligned with it so that the protrusions 63 of the master male die are arranged substantially coaxially with the through holes 54a, individually, of the die body.

In this state, silicone is filled into the individual through holes 54a of the die body 52a, as shown in FIG. 7D. After the silicone is cured, the master male die 62 is released. Thereupon, the upper die 36a can be obtained integrally having the hole forming portions 56a that define the spacer forming holes 40a, as shown in FIG. 7E.

The lower die 36b, which is constructed in the same manner as the upper die 36a, is also provided with a die body 52b that is formed having a large number of through holes 54b, hole forming portions 56b that are formed of silicone and located individually in the through holes, and spacer forming holes 40b formed in the hole forming portions, individually. The lower die 36b is manufactured in the same manner as aforesaid.

In manufacturing the spacer assembly 22 by using the upper die 36a and the lower die 36b fabricated in the aforesaid manner, the upper die 36a is positioned so that the spacer forming holes 40a are aligned individually with the spacer openings 28 of the grid 24, and is adhered to the first surface 24a of the grid, as shown in FIGS. 5 and 6. Likewise, the lower die 36b is positioned so that the spacer forming holes 40b are aligned individually with the spacer openings 28 of the grid 24, and is adhered to the second surface 24b of the grid. The upper die 36a, grid 24, and lower die 36b are kept intimately in contact with one another by a clamp mechanism (not shown) or the like. Thus, an assembly 42 is constructed consisting of the grid 24, upper die 36a, and lower die 36b. This assembly is formed having a large number of through holes 44, each of which is composed of the spacer forming hole 40a, spacer opening 28, and spacer forming hole 40b.

Subsequently, the assembly 42 is kept substantially level with the lower die 36b situated below, and is set so that the respective central axes of the through holes 44 extend in a substantially vertical direction. In this state, a pasty spacer forming material 46 is supplied from the obverse side of the lower die 36b or from the underside of the assembly 42 by using a filling head, for example. The spacer forming material is filled into the through holes 44 from bottom to top under a fixed pressure.

A glass paste that contains at least an ultraviolet-curing binder (organic component) and a glass filler is used as the spacer forming material 46. The viscosity of the spacer forming material 46 is adjusted to, for example, 6,000 cP to 20,000 cP. As filling conditions, the filling rate and filling pressure of the spacer forming material 46 are set at 10 mm/s to 200 mm/s and 0.1 MPa, respectively.

As the spacer forming material 46 is filled into the through holes 44, a surplus of the spacer forming material runs out onto the topside of the assembly 42, that is, the topside of the upper die 36a, through the through holes 44. Therefore, the upper surface of the assembly 42 is scraped with a squeegee to remove a bulging portion 47 of the spacer forming material 46.

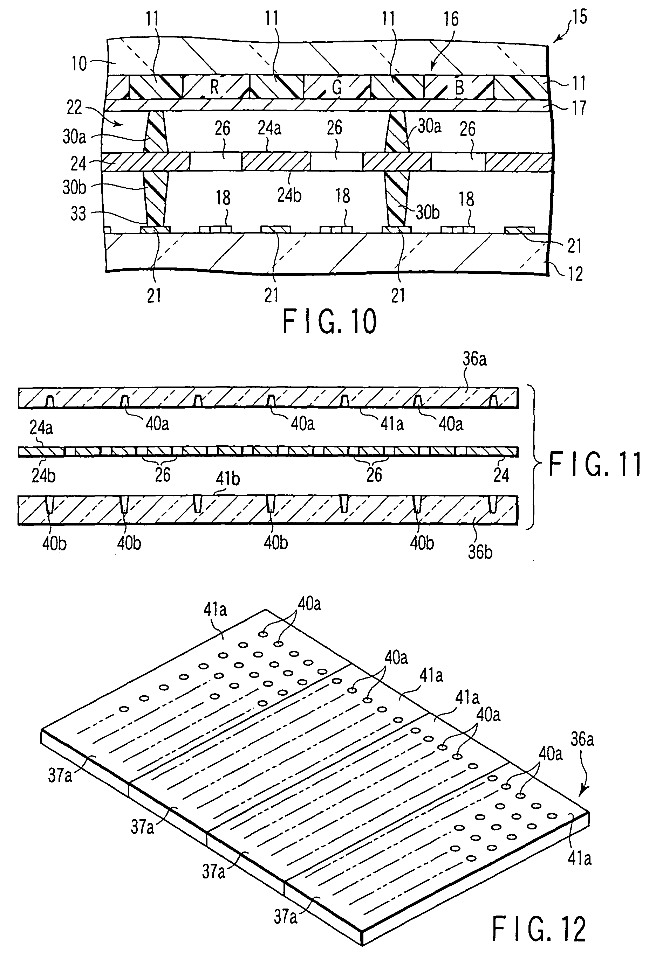

Subsequently, as shown in FIG. 8, ultraviolet (UV) rays are applied to the filled spacer forming material 46 from the outer surface side of the upper die 36a and the lower die 36b, for example, whereby the spacer forming material is UV-cured. When this is done, regions around the spacer forming holes 40a and 40b that are filled with the spacer forming material 46 are surrounded by the hole forming portions 56a and 56b that are formed of silicone as a UV transmitting material. Accordingly, ultraviolet rays are applied to the spacer forming material 46 directly and through the hole forming portions 56a and 56b. Thus, the filled spacer forming material 46 can be securely cured to its inner part.

Thereafter, the upper die 36a and the lower die 36b are separated from the grid 24 in a manner such that the cured spacer forming material 46 remains on the grid 24, as shown in FIG. 9. Then, the grid 24 that is filled with the spacer forming material 46 is heat-treated in a heating furnace, whereby the binder is removed from the spacer forming material. Thereafter, the spacer forming material is regularly fired at about 500 to 550°C for 30 minutes to one hour. Thereupon, the spacer assembly 22 is obtained having the first and second built-in spacers 30a and 30b on the grid 24.

In manufacturing the SED, the front substrate 10, which is provided with the frame 16 and the metal back 17, and the rear substrate 12, which is provided with the electron emitting elements 18 and the wires 21 and joined to the sidewall 14, are prepared in advance.

Subsequently, the spacer assembly 22 obtained in this manner is positioned on the rear substrate 12. In this state, the front substrate 10, rear substrate 12, and spacer assembly 22 are located in a vacuum chamber. After the vacuum chamber is evacuated, the front substrate is joined to the rear substrate by means of the sidewall 14. Thus, the SED provided with the spacer assembly 22 is manufactured.

According to the molding tool and the manufacturing method for the spacer assembly constructed in this manner, the regions around the spacer forming holes 40a and 40b are surrounded by the hole forming portions 56a and 56b that are formed of silicone as a UV transmitting material. In curing the spacer forming material, therefore, the applied ultraviolet rays are transmitted through the hole forming portions 56a and 56b, and reach a deep part of the spacer forming material 46, whereby the filled spacer forming material 46 can be securely cured to its inner part. Thus, the spacers can be formed into a desired shape, and the spacers having satisfactory strength can be obtained.

The spacer forming material can be cured with ultraviolet irradiation only, without utilizing heat curing. In curing the spacer forming material, therefore, production of a difference in temperature distribution between the grid and the molding tool, dislocation between the grid and a molding tool interface, etc., by heating and cooling can be prevented. Thus, the spacer assembly can be manufactured with high accuracy without breaking the spacers, and the manufacturing cost can be lowered. At the same time, the respective thermal expansion coefficients and temperatures of a grid material and a molding tool material need not be strictly controlled, so that the efficiency of production of the spacer assembly can be improved.

On the other hand, a method may be proposed in which the upper die 36a and the lower die 36b are manufactured using resin, glass, etc. In consideration of the manufacturing cost, however, there is the premise that the upper and lower dies can be used repeatedly, so that their mechanical strength is naturally expected to be high.

The vacuum envelope of the SED is constructed so that the first and second spacers 30a and 30b support the atmospheric pressure, and therefore, the accuracy of the respective heights of these spacers is essential. Accordingly, abrasion of the surfaces of the upper die 36a and the lower die 36b, which results in lowering of the spacer height accuracy, must be restricted. Thus, it is hard to form the upper die 36a and the lower die 36b entirely from resin or glass.

According to the embodiment described above, on the other hand, only minimum ranges of the molding tool around the spacer forming holes are formed of the UV transmitting material, and metal or other material that has high mechanical strength can be used for most of other parts. Thus, the mechanical rigidity and abrasion resistance can be improved considerably.

Although the ultraviolet-curing material is used as the spacer forming material according to the embodiment described above, a thermosetting spacer forming material may be used instead. Thus, a glass paste that contains a thermosetting binder and a glass filler may be used as the spacer forming material 46.

In this case, the assembly 42 is formed by using the same grid 24, upper die 36a, and lower die 36b according to the foregoing embodiment, and the spacer forming material 46 is filled into the through holes 44. After the assembly 42 is then heated to thermally cure the spacer forming material, the upper die 36a and the lower die 36b are separated from the grid 24.

Then, the grid 24 that is filled with the spacer forming material 46 is heat-treated in the heating furnace, whereby the binder is removed from the spacer forming material. Thereafter, the spacer forming material is regularly fired at about 500 to 550°C for 30 minutes to one hour. Thereupon, the spacer assembly 22 is obtained having the first and second built-in spacers 30a and 30b on the grid 24.

In thermally curing the spacer forming material 46, in the case of this system, a surface-direction dislocation is liable to be caused on an interface between the grid surface and the upper die and lower surfaces, owing to differences in temperature distribution and thermal expansion coefficient between the grid 24, upper die 36a, and lower die 36b. According to the present embodiment, however, the hole forming portions 56a and 56b that are arranged around the spacer forming holes 40a and 40b in the upper die 36a and the lower die 36b are formed of silicone for use as an elastic material. If a surface-direction dislocation is caused between the grid and the molding tool, therefore, a load that acts on the thermally cured spacer forming material 46 can be absorbed by elastic deformation of the hole forming portions 56a and 56b. Thus, breakage of the spacers that is attributable to the aforesaid dislocation can be prevented. In consequence, the spacer forming material that is thermally cured can be quickly heated and cooled, so that the manufacturing efficiency can be improved.

In the embodiment described above, the spacer forming material is filled into the spacer forming holes of the molding tool after the assembly is formed by adhering the molding tool to the grid. Alternatively, however, the assembly may be formed by adhering the molding tool to the grid after filling the spacer forming material into the spacer forming holes of the molding tool.

The diameter and height of the spacers and the dimensions and materials of the other components are not limited to those of the foregoing embodiment, and may be suitably selected as required. Likewise, the spacer forming material and the filling conditions may be variously selected as required. The UV transmitting material that is used for the hole forming portions of the molding tool is not limited to silicone, and may alternatively be polycarbonate, acrylic resin, etc.

In the spacer assembly, the grid may be constructed having no spacer openings. Further, the first and second spacers need not be located coaxially with one another, and may be deviated in position from one another in the surface direction of the grid. In the spacer assembly, moreover, the spacers may be provided only on one surface of the grid. In this case, the molding tool should be used only for one side of the grid, and the assembly is formed by adhering the molding tool to the grid.

The following is a description of a manufacturing method and a manufacturing apparatus for a spacer assembly according to a second embodiment of this invention. An SED provided with a spacer assembly that is manufactured by using the present manufacturing method is constructed in the same manner as the foregoing embodiment. As shown in FIG. 10, however, a grid 24 of a spacer assembly 22 has no spacer openings, and first and second spacers 30a and 30b are set up integrally on a surface of the grid between electron beam apertures 26. This embodiment shares other configurations of the SED with the foregoing embodiment, so that like reference numerals are used to designate like portions, and a detailed embodiment of those portions is omitted.

In the manufacturing method according to the second embodiment, as shown in FIG. 11, the grid 24 of a given size and upper and lower dies 36a and 36b, each in the form of a rectangular plate having substantially the same size as the grid, are prepared first. After a metal plate of Fe-50% Ni with a thickness of 0.12 mm is degreased, washed, and dried, in this case, the electron beam apertures 26 are formed by etching to prepare the grid 24. After the whole grid 24 is oxidation-treated, an insulating film containing glass or the like is formed on the grid surface including the respective inner surfaces of the electron beam apertures 26.

As shown in FIGS. 11 and 12, the upper die 36a and the lower die 36b that serve as a molding tool are each formed as a flat plate of a transparent material, such as transparent silicone or transparent polyethylene terephthalate, which transmits ultraviolet rays. The upper die 36a has a flat contact surface 41a that engages the grid 24 and a large number of bottomed spacer forming holes 40a for molding the first spacers 30a. The spacer forming holes 40a separately open in the contact surface 41a and are arranged at given spaces.

In the present embodiment, the upper die 36a is composed of, for example, four divided pieces 37a that are divided in the longitudinal direction, and these divided pieces are formed so that they can be separated from and joined to one another. Each divided piece 37a is in the form of an elongated rectangular plate, and the spacer forming holes 40a form a plurality of columns that extend individually in the longitudinal direction of the divided pieces 37a.

The lower die 36b has a flat contact surface 41b and a large number of bottomed spacer forming holes 40b for molding the second spacers 30b. The spacer forming holes 40b separately open in the contact surface 41b and are arranged at given spaces. The lower die 36b is formed by connecting four divided pieces (not shown).

Subsequently, as shown in FIGS. 7 and 8, a partition plate 70 is prepared having the form of an elongated rectangular plate that is substantially equal in size to each of the divided pieces 37a of the upper die 36a and the lower die 36b. The partition plate 70 is formed having a plurality of slits 72, which individually extend in the longitudinal direction of the partition plate. Each slit 72 has a width a little greater than the bore diameter of each spacer forming hole 40a in each divided piece 37a. The pitch of the slits 72 in the width direction of the divided pieces 37a is substantially the same as the pitch of the spacer forming holes in the width direction of the divided pieces.

The partition plate 70 is placed on the contact surface 41a of the divided piece 37a and adhered to the contact surface. In doing this, the partition plate 70 is positioned and set so that the slits 72 of the partition plate 70 face the spacer forming holes 40a of the divided piece 37a. Thereupon, partition walls that are defined by the partition plate 70 are arranged on the opposite sides of each spacer forming hole 40a in the width direction of the divided piece 37a. The partition plate 70 is set in like manner for each divided piece of the lower die 36b.

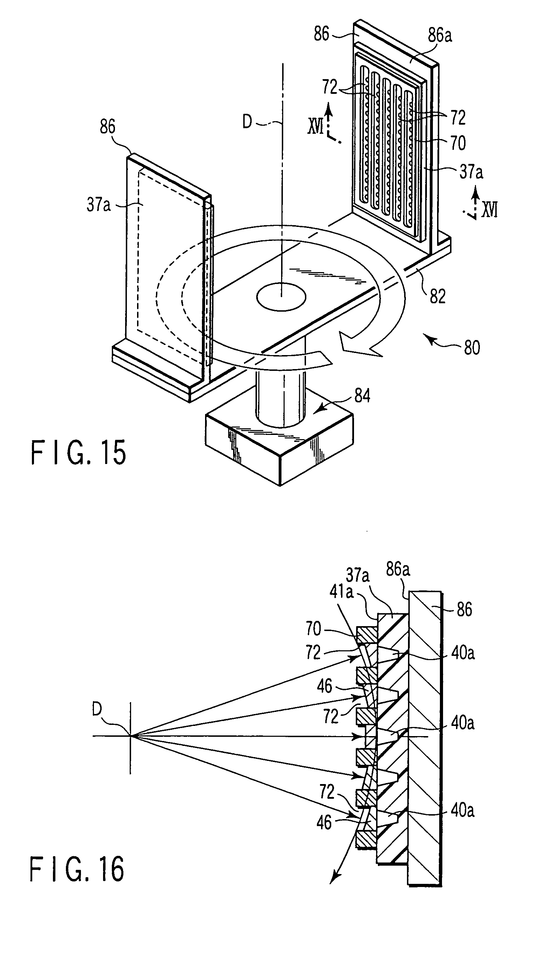

As shown in FIGS. 15 and 16, the spacer forming material 46 is filled into the slits 72 of the partition plate 70 that is attached to the divided piece 37a, and fed to regions near the respective opening portions of the spacer forming holes 40a. A glass paste that contains at least an ultraviolet-curing binder (organic component) and a glass filler is used as the spacer forming material 46. The specific gravity and viscosity of the glass paste are suitably selected.

Then, a plurality of sets, e.g., two sets, of divided pieces 37a and partition plates 70 that are supplied with the spacer forming material 46 are prepared and set on a filling device 80. The filling device 80 comprises a rotor 82 and a rotating mechanism 84. The rotor 82 is in the form of a rectangular plate that extends substantially horizontally. The rotating mechanism 84 supports the central part of the rotor with respect to the longitudinal direction and rotates the rotor around a rotation axis D that extends vertically. Plate-like support brackets 86 that serve as support members are fixed individually to the longitudinally opposite end portions of the rotor 82. The support brackets 86 individually extend vertically and face to each other in a parallel relationship with the rotation axis D between them. The distance between each support bracket 86 and the rotation axis D is set to about 500 mm, for example. The inner surface of each support bracket 86 forms a flat support surface 86a that serves as a support portion.

The two sets of divided pieces 37a and partition plates 70 are mounted individually on the support brackets 86 by using a clamper (not shown) or the like so that the back side of the divided pieces is intimately in contact with the support surfaces 86a of the support brackets 86. Thereupon, the contact surface 41a of each divided piece 37a and the partition plate 70 extend parallel to the rotation axis D and face the rotation axis side. Further, the divided piece 37a and the partition plate 70 are attached to the support bracket 86 so that the slits 72 of the partition plate 70 are situated parallel to the rotation axis D. Thus, the contact surface 41a of the divided piece 37a extends in a direction tangent to a circle around the rotation axis D, as is well seen from FIG. 16. At the same time, the partition walls that are defined on the contact surface 41a by the partition plate 70 are arranged with gaps in the aforesaid tangential direction and situated on the opposite sides of the spacer forming holes 40a.

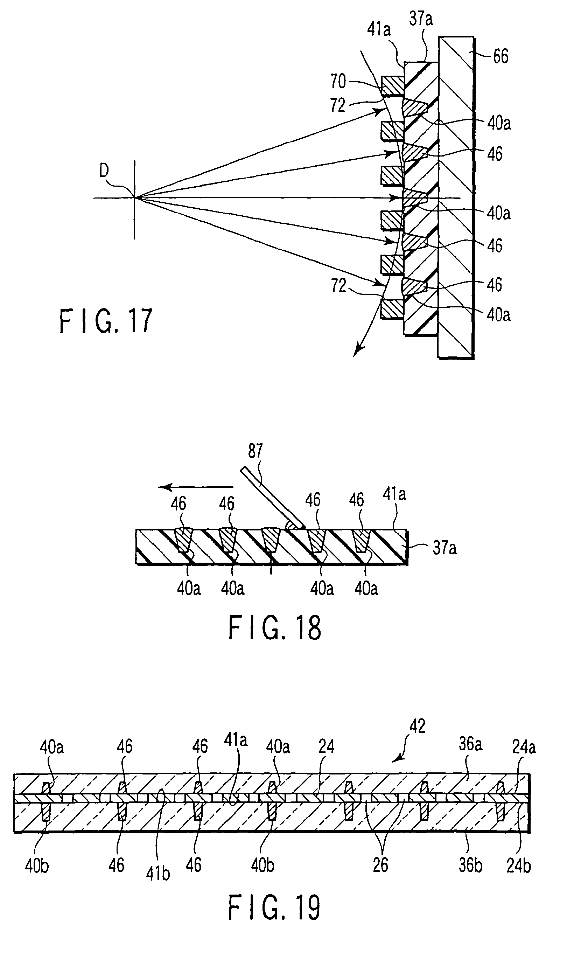

Subsequently, the rotor 82 is rotated at a given rotational speed of, e.g., 700 to 800 rpm for about one to five minutes by the rotating mechanism 84. Thereupon, centrifugal force is produced in the spacer forming material 46, as shown in FIGS. 16 and 17. At the same time, this centrifugal force generates a defoaming action that forces out air in the spacer forming holes 40a that are formed in the divided pieces 37a. Thus, air in the spacer forming holes 40a is replaced with the spacer forming material 46, so that the spacer forming holes 40a are filled with the spacer forming material 46.

As shown in FIG. 16, moreover, each divided piece 37a of the molding tool is in the form of a flat plate. While it is rotating, therefore, the spacer forming material 46 that is fed to regions near other spacer forming holes than the spacer forming hole 40a situated in the direction normal to the rotation axis D is subjected to forces not in the normal direction, that is, forces in directions such that the material flows out from the divided piece 37a. In the present embodiment, however, the partition walls are defined on the opposite sides of each spacer forming hole 40a by the partition plate 70 so that the spacer forming material 46 can be restrained from flowing out as the divided piece 37a is rotated. With use of centrifugal force, furthermore, air components having previously been trapped in the spacer forming material 46 can be removed, so that the spacer forming holes 40a of the divided piece 37a can be filled with the spacer forming material that involves no air bubbles.

In the processes described above, the spacer forming material 46 is filled at a time into the spacer forming holes 40a of the two divided pieces 37a. After the filling, the divided pieces 37a are disengaged from the support brackets 86 of the filling device 80, and moreover, the partition plates 70 are removed from the divided pieces. As shown in FIG. 82, thereafter, the contact surface 41a of each divided piece 37a is rubbed with a squeegee to scrape off a surplus of the spacer forming material 46 that overflows the spacer forming holes 40a.

After the spacer forming holes 40a of the four divided pieces 37a are filled with the spacer forming material 46 by repeating the same processes as aforesaid, the divided pieces are joined together to form the one upper die 36a. In the same processes as aforesaid, the lower die 36b is prepared in which the spacer forming holes 40b are filled with the spacer forming material 46.

Subsequently, as shown in FIG. 19, the upper die 36a and the lower die 36b that are filled with the spacer forming material 46 are adhered to the grid 24 to form the assembly 42. In this case, the upper die 36a is positioned so that the spacer forming holes 40a are situated between the electron beam apertures 26 of the grid 24, and the contact surface 41a is adhered to the first surface 24a of the grid 24. Likewise, the lower die 36b is positioned so that the spacer forming holes 40b are situated between the electron beam apertures 26, and the contact surface 41b is adhered to the second surface 24b of the grid 24. In this manner, the assembly 42 is formed consisting of the grid 24, upper die 36a, and lower die 36b. In the assembly 42, the spacer forming holes 40a of the upper die 36a and the spacer forming holes 40b of the lower die 36b are arranged opposite one another with the grid 24 between them.

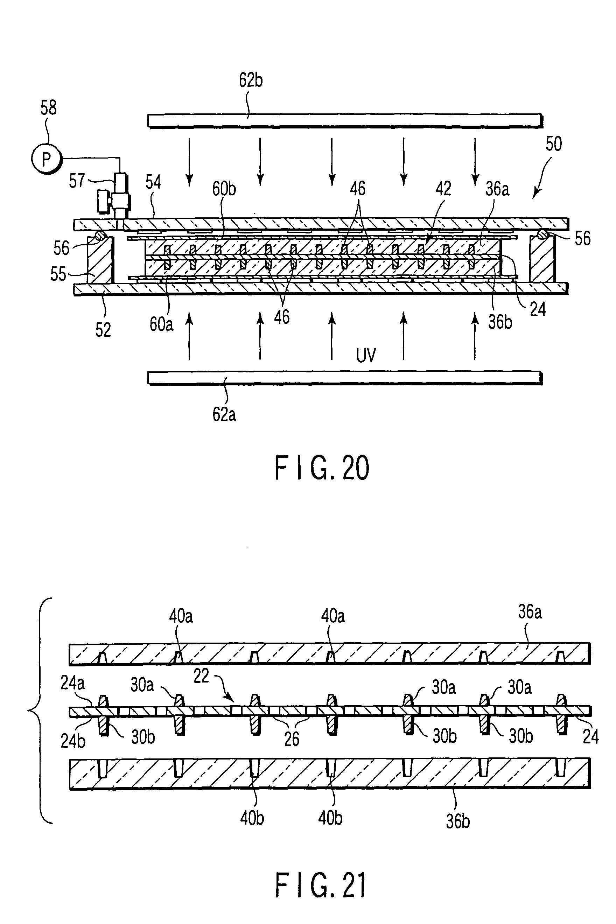

As shown in FIG. 20, thereafter, the assembly 42 is placed in a flat vacuum vessel 50, and the upper die 36a and the lower die 36b are adhered to the grid 24 by utilizing the atmospheric pressure. The vacuum vessel 50 will now be described in detail.

The vacuum vessel 50 has a first main wall 52 and a second main wall 54 in the form of a rectangular plate each. The first and second main walls are arranged opposite each other with a gap between them. A sidewall 55 in the form of a rectangular frame is provided between the respective peripheral edge portions of the first and second main walls 52 and 54. The sidewall 55 is airtightly fixed to the peripheral edge portion of the inner surface of the first main wall 52, and is set substantially upright on the first main wall. A free end of the sidewall 55, its upper end in this case, airtightly engages the peripheral edge portion of the inner surface of the second main wall 54 with the aid of an O-ring 56. The interior of the vacuum vessel 50 is connected to a vacuum pump 58 through an exhaust valve 57 that is attached to the peripheral edge portion of the second main wall 54.

The first and second main walls 52 and 54 are formed having a plane size larger than that of the grid 24. Further, the first and second main walls 52 and 54 are formed of transparent silicone, transparent polyethylene terephthalate, glass, or other material that is elastically deformable and can transmit ultraviolet rays. As mentioned later, indentations are formed substantially covering the whole inner surfaces of the first and second main walls 52 and 54 so that the entire assembly 42 can be pressurized uniformly.

In holding the assembly 42 by means of the vacuum vessel 50 constructed in this manner, a pressure diffuser plate 60a is laid on the inner surface of the first main wall 52 with the second main wall 54 off. The assembly 42 is placed on the pressure diffuser plate 60a, and the lower die 36b is opposed to the first main wall 52, for example.

Then, a pressure diffuser plate 60b is placed on the assembly 42, and the second main wall 54 is further located overlapping them and opposed to the upper die 36a of the assembly 42 so that its peripheral edge portion overlaps the O-ring 56. The pressure diffuser plates 60a and 60b are formed of a UV transmitting material.

After the vacuum pump 58 for use as exhaust means is actuated to exhaust the interior of the vacuum vessel 50 to a given degree of vacuum in this state, the exhaust valve 57 is closed to maintain a vacuum in the vacuum vessel. If the vacuum vessel 50 is evacuated, the atmospheric pressure acts on the first and second main walls 52 and 54 of the vacuum vessel. Thus, the first and second main walls 52 and 54 press from both sides the assembly 42 that is located inside them, thereby adhering the upper die 36a and the lower die 36b to the grid 24.

Since the first and second main walls 52 and 54 of the vacuum vessel 50 are formed of an elastically deformable material, as mentioned before, they are elastically deformed along the assembly 42 and adhere to the upper die 36a and the lower die 36b. The respective inner surfaces of the first and second main walls 52 and 54 are rugged. Therefore, the atmospheric pressure evenly acts on the whole surfaces of the upper die 36a and the lower die 36b through the pressure diffuser plates 60a and 60b, respectively. Thus, the grid 24, upper die 36a, and lower die 36b can be kept in a very good intimate contact state.

With the grid 24, upper die 36a, and lower die 36b kept intimately in contact with one another by utilizing the atmospheric pressure in the aforesaid manner, ultraviolet rays (UV) from ultraviolet lamps 62a and 62b outside the vacuum vessel 50 are applied toward the first and second main walls 52 and 54. The first and second main walls 52 and 54 of the vacuum vessel 50, pressure diffuser plates 60a and 60b, upper die 36a, and lower die 36b are formed of a UV transmitting material each. Therefore, the ultraviolet rays emitted from the ultraviolet lamps 62a and 62b are transmitted through the first and second main walls 52 and 54 of the vacuum vessel 50, pressure diffuser plates 60a and 60b, upper die 36a, and lower die 36b are applied to the filled spacer forming material 46. Thus, the spacer forming material 46 can be UV-cured with the assembly 42 kept in a very good intimate contact state.

Subsequently, the vacuum in the vacuum vessel 50 is removed, and the assembly 42 is taken out of the vacuum vessel. Since the second main wall 54 is only in contact with the O-ring 56 as this is done, the vacuum vessel can be easily opened by removing the vacuum. Thereafter, the upper die 36a and the lower die 36b are separated from the grid 24 in a manner such that the cured spacer forming material 46 remains on the grid 24, as shown in FIG. 21. Then, the grid 24 that is provided with the spacer forming material 46 is heat-treated in the heating furnace, whereby the binder is removed from the spacer forming material. Thereafter, the spacer forming material is regularly fired at about 500 to 550°C for 30 minutes to one hour. Thereupon, the spacer assembly 22 is obtained having the first and second built-in spacers 30a and 30b on the grid 24.

In manufacturing the SED, on the other hand, a front substrate 10, which is provided with a frame 16 and a metal back 17, and a rear substrate 12, which is provided with electron emitting elements 18 and wires 21 and joined to a sidewall 14, are prepared in advance.

Subsequently, the spacer assembly 22 obtained in this manner is positioned on the rear substrate 12. In this state, the front substrate 10, rear substrate 12, and spacer assembly 22 are located in the vacuum chamber. After the vacuum chamber is evacuated, the front substrate is joined to the rear substrate by means of the sidewall 14. Thus, the SED provided with the spacer assembly 22 is manufactured.

According to the filling device, the vacuum vessel and the manufacturing method for the spacer assembly constructed in this manner, the molding tool is rotated after the spacer forming material is stuck to the outside of the spacer forming holes of the molding tool, and air in the spacer forming holes is replaced with the spacer forming material by utilizing centrifugal force. By doing this, the spacer forming material can be securely filled into the fine spacer forming holes. Thus, spacers having a desired shape and desired height can be formed with high accuracy. With use of centrifugal force, moreover, air components trapped in the spacer forming material during filling operation can be removed, so that the high-quality spacers can be formed without involving any air bubbles.

Further, the upper and lower dies 36a and 36b are adhered individually to the opposite surfaces of the grid 24 to form the assembly 42, this assembly is located in the elastically deformable, flat vacuum vessel 50, and the vacuum vessel is evacuated. Then, the first and second main walls 52 and 54 of the vacuum vessel 50 are pressed against the assembly 42 to be elastically deformed by the atmospheric pressure that acts on the vacuum vessel, whereby a pressure is generated that causes the grid 24 and the upper and lower dies 36a and 36b to adhere to one another. Thus, the grid 24 and the upper and lower dies 36a and 36b can be kept in an extremely intimate contact state. Thus, the spacer forming material 46 that is filled in the upper and lower dies 36a and 36b can be securely prevented from leaking out between the dies and the grid 24, and spacers having a desired shape and desired height can be formed with high accuracy.

Further, it is unnecessary to arrange a large number of holding members and apply a high holding pressure to each holding member in order to adhere the grid and the dies to one another. Thus, manufacturing processes can be simplified, and the vacuum vessel can be miniaturized and simplified.

A material that contains an ultraviolet-curing component is used as the spacer forming material, and the first and second main walls of the vacuum vessel 50 and the upper and lower dies are formed of a UV transmitting material. By doing this, ultraviolet rays can be applied to the spacer forming material 46 to UV-cure it without failing to keep the assembly 42 in an extremely intimate contact state. Thus, a spacer assembly that has spacers of a desired shape can be manufactured with high accuracy and more efficiently than in the conventional case.

In the second embodiment, the diameter and height of the spacers, the sizes and materials of the other components, etc., are not limited to the particulars of the foregoing embodiment, and may be suitably selected as required. Likewise, the spacer forming material may be variously selected as required.

The UV transmitting material that is used for the vacuum vessel and the molding tool is not limited to silicone, polyethylene terephthalate, glass, etc., and may alternatively be polycarbonate, acrylic resin, etc. Further, acrylic resin, nylon, ABS resin, Teflon (trademark) etc. may be used as the molding tool forming material.

In the spacer assembly, the first and second spacers need not be aligned coaxially with one another, and may be deviated in position from one another in the surface direction of the grid. Further, the spacer assembly is not limited to an SED and may be also applied to any other image display devices.

Although the molding tool is composed of the four divided pieces in the second embodiment, the number of division may be increased or reduced as required. Alternatively, a single molding tool may be used without being divided. The molding tool is not limited to the shape of a plate and may be given any other shape, if necessary.

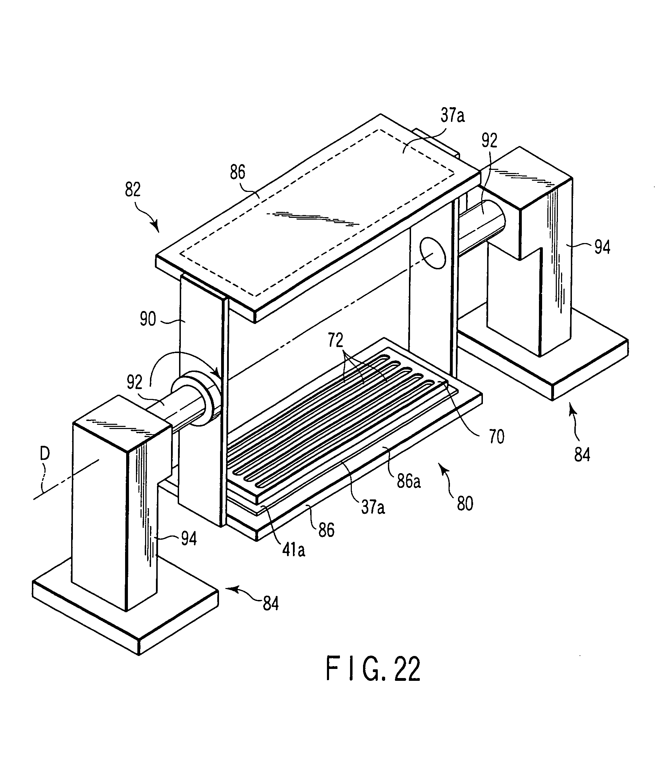

In the embodiment described above, moreover, the filling device has the rotation axis D that extends vertically. Alternatively, however, it may be configured to have a rotation axis D that extends horizontally. According to a third embodiment shown in FIG. 22, a filling device 80 comprises a rotor 82 and a rotating mechanism 84. The rotor 82 is rotatable around the horizontal rotation axis D. The rotating mechanism 84 supports the rotor and rotates the rotor around the rotation axis D. The rotor 82 has a pair of rotating arms 90, each in the form of a rectangular plate that extends substantially vertically, and a pair of plate-like support brackets 86. The support brackets 86 are fixed individually between the longitudinally opposite end portions of the pair of rotating arms 90, individually extend horizontally, and face each other in a parallel relationship with the rotation axis D between them. The distance between each support bracket 86 and the rotation axis D is set to about 500 mm, for example.

The rotating mechanism 84 comprises rotating rods 92 that are coupled individually to the respective centers of the rotating arms 90. The rotating rods 92 extend outward from the rotating arms 90 so as to be coaxial with the rotation axis D and are rotatably supported by their corresponding support posts 94. Each support post 94 is provided with a drive mechanism (not shown) for rotating its corresponding rotating rod 92. The rotor 82 can be rotated at a given rotational speed by rotating the rotating rods 92.

When filling the spacer forming material 46 into the spacer forming holes of the molding tool by using the filling device 80, two sets of divided pieces 37a and partition plates 70 that are supplied with the spacer forming material 46 are mounted on the support brackets 86 by using a clamper (not shown) or the like, as in the foregoing embodiment. As this is done, the back side of each divided piece 37a is adhered to a support surface 86a of each support bracket 86. Thereupon, a contact surface 41a of each divided piece 37a and the partition plate 70 extend parallel to the rotation axis D and face the rotation axis side as they are attached to the support bracket 86. Further, the divided piece 37a and the partition plate 70 are attached to the support bracket 86 so that slits 72 of the partition plate 70 are situated parallel to the rotation axis D.

In this state, the rotor 82 is rotated at the given rotational speed, e.g., 700 to 800 rpm for about one to five minutes. Thereupon, centrifugal force is produced in the spacer forming material 46, and the spacer forming material is filled into spacer forming holes 40a that are formed in the divided pieces 37a. This embodiment shares other configurations with the foregoing second embodiment, so that like reference numerals are used to designate like portions, and a detailed embodiment of those portions is omitted.

Also with use of the filling device 80 constructed in this manner, the same functions and effects of the foregoing second embodiment can be obtained.

In the second and third embodiments described above, the spacer forming material is filled at a time into two molding tools that are attached to the filling device. Alternatively, however, the spacer forming material may be filled into one or three or more molding tools that are attached to the filling device. If a plurality of support members are used for the filling device, moreover, these support members are arranged around the rotation axis. Alternatively, a plurality of molding tools may be attached to one ring-shaped support member that is provided coaxially with the rotation axis. Further, the partition plates may be omitted if the width of the divided pieces of the main walls, that is, the width along a direction tangent to the direction of rotation, is short.

In the embodiment described above, the grid is used as a plate-like member, and the spacer assembly has the spacers arranged on individually on the opposite surfaces of the grid. However, the plate-like member is not limited to a grid, and any other plate material, such as a glass plate, may be used instead. Further, a spacer may be provided on only one surface of the plate-like member instead of being provided on each surface. In this case, it is necessary that only one molding tool be used and that the assembly be formed by adhering the molding tool to one surface of the grid. Another manufacturing process may be carried out in the same manner as in the foregoing second embodiment.

### Industrial Applicability

According to the present invention, as described in detail herein, there may be provided a manufacturing method for a spacer assembly, capable of efficiently manufacturing the spacer assembly with high accuracy, a spacer forming material filling method, a spacer forming material filling device, a molding tool, and a vacuum vessel.

## Claims

1. A method of manufacturing a spacer assembly, which comprises a plate-like grid having a plurality of beam apertures and a plurality of columnar spacers set up integrally on a surface of the grid and is used in an image display device, the method comprising:
preparing the plate-like grid having a plurality of beam apertures;
preparing a plate-like molding tool having a plurality of spacer forming holes and a plurality of hole forming portions situated individually around the spacer forming holes to define the spacer forming holes and formed of a UV transmitting material;
contacting the molding tool to the surface of the grid, thereby forming an assembly composed of the molding tool and the grid;
filling an ultraviolet-curing spacer forming material into the spacer forming holes of the molding tool before or after the formation of the assembly;
applying ultraviolet rays to the filled spacer forming material directly or through the hole forming portions, thereby curing the spacer forming material; and
separating the molding tool from the grid with the cured spacer forming material left on the grid.

2. A method of manufacturing a spacer assembly, which comprises a plate-like grid having a plurality of beam apertures and a plurality of columnar spacers set up integrally on both surfaces of the grid and is used in an image display device, the method comprising:
preparing the plate-like grid having a plurality of beam apertures and a plurality of spacer openings situated individually between the beam apertures;
preparing two plate-like molding tools each having a plurality of spacer forming holes corresponding individually to the spacer openings of the grid and a plurality of hole forming portions situated individually around the spacer forming holes to define the spacer forming holes and formed of a UV transmitting material;
contacting the molding tools individually to the opposite surfaces of the grid with the spacer openings of the grid and the spacer forming holes of the molding tools aligned with one another, thereby forming an assembly including the two molding tools and the grid;
filling an ultraviolet-curing spacer forming material into the spacer forming holes of the molding tools before or after the formation of the assembly;
applying ultraviolet rays to the filled spacer forming material in the assembly directly or through the hole forming portions, thereby curing the spacer forming material; and
individually separating the molding tools from the grid with the cured spacer forming material left on the grid.

3. The method of manufacturing a spacer assembly according to claim 1 or 2, wherein a glass paste containing at least an ultraviolet-curing binder and a glass filler is used as the spacer forming material.

4. A method of manufacturing a spacer assembly, which comprises a plate-like grid having a plurality of beam apertures and a plurality of columnar spacers set up integrally on a surface of the grid and is used in an image display device, the method comprising:
preparing the plate-like grid having the plurality of beam apertures;
preparing a plate-like molding tool having a plurality of spacer forming holes and a plurality of hole forming portions situated individually around the spacer forming holes to define the spacer forming holes and formed of an elastic material;
contacting the molding tool to the surface of the grid, thereby forming an assembly composed of the molding tool and the grid;
filling a thermosetting spacer forming material into the spacer forming holes of the molding tool before or after the formation of the assembly;
curing the filled spacer forming material in the assembly by heating; and
separating the molding tool from the grid with the cured spacer forming material left on the grid.

5. A method of manufacturing a spacer assembly, which comprises a plate-like grid having a plurality of beam apertures and a plurality of columnar spacers set up integrally on both surfaces of the grid and is used in an image display device, the method comprising:
preparing the plate-like grid formed having the plurality of beam apertures and a plurality of spacer openings situated individually between the beam apertures;
preparing two plate-like molding tools each having a plurality of spacer forming holes corresponding individually to the spacer openings of the grid and a plurality of hole forming portions situated individually around the spacer forming holes to define the spacer forming holes and formed of an elastic material;
contacting the molding tools individually to the opposite surfaces of the grid with the spacer openings of the grid and the spacer forming holes of the molding tools aligned with one another, thereby forming an assembly composed of the two molding tools and the grid;
filling a thermosetting spacer forming material into the spacer forming holes of the molding tools before or after the formation of the assembly;
curing the filled spacer forming material by heating; and
individually separating the molding tools from the grid with the cured spacer forming material left on the grid.

6. The method of manufacturing a spacer assembly according to claim 1, 2, 4 or 5, wherein the spacer forming material is fired after the molding tool is separated.

7. The method of manufacturing a spacer assembly according to claim 1, 2, 4 or 5, wherein a grid of a metal plate having an oxide film formed on a surface thereof is used as the grid.

8. A molding tool used in the method of manufacturing a spacer assembly according to claim 1 or 2, the molding tool comprising:
a plate-like die body; and
a plurality of hole forming portions each formed of a UV transmitting material, defining the spacer forming holes, and provided integrally with the die body.

9. The molding tool according to claim 8, wherein the die body has a plurality of through holes, and the hole forming portions are arranged in the through holes.

10. A molding tool used in the method of manufacturing a spacer assembly according to claim 1 or 2, the molding tool comprising:
a plate-like die body; and
a plurality of hole forming portions each formed of an elastic material, defining the spacer forming holes, and provided integrally with the die body.

11. The molding tool according to claim 10, wherein the die body has a plurality of through holes, and the hole forming portions are arranged in the through holes.

12. A filling method for a spacer forming material for filling the spacer forming material into a plurality of bottomed spacer forming holes of a molding tool which has a contact surface and the spacer forming holes opening in the contact surface, the filling method comprising:
supplying a pasty spacer forming material to spacer forming hole portions of the molding tool; and
rotating the molding tool supplied with the spacer forming material around a rotation axis situated off the molding tool so that air in the spacer forming holes is replaced with the spacer forming material by a centrifugal force, thereby filling the spacer forming holes with the spacer forming material.

13. The filling method for a spacer forming material according to claim 12, wherein the molding tool is rotated with the contact surface extending parallel to the rotation axis and facing the rotation axis side.

14. The filling method for a spacer forming material according to claim 12 or 13, wherein partition walls which are situated on the opposite sides of the spacer forming holes with respect to a direction tangent to a circle around the rotation axis are provided on the contact surface so that the spacer forming material is restrained from flowing out by the partition walls as the molding tool is rotated after the spacer forming material is supplied between the partition walls.

15. A method of manufacturing a spacer assembly, which comprises a plate-like member and a plurality of columnar spacers set up integrally on a surface of the plate-like member and is used in an image display device, the method comprising:
preparing a molding tool having a contact surface and a plurality of bottomed spacer forming holes opening in the contact surface;
supplying a pasty spacer forming material to spacer forming hole portions of the molding tool;
rotating the molding tool supplied with the spacer forming material around a rotation axis situated off the molding tool so that air in the spacer forming holes is replaced with the spacer forming material by centrifugal force, thereby filling the spacer forming holes with the spacer forming material;
holding the molding tool with the spacer forming holes filled with the spacer forming material in a manner such that the contact surface is intimately in contact with the surface of the plate-like member; and
curing the spacer forming material with the molding tool and the plate-like member intimately in contact with each other, thereby forming a plurality of spacers on the surface of the plate-like member.

16. A method of manufacturing a spacer assembly, which comprises a plate-like grid having a plurality of beam apertures and a plurality of columnar spacers set up integrally on a surface of the grid and is used in an image display device, the method comprising:
preparing the plate-like grid having the plurality of beam apertures;
preparing a molding tool having a contact surface and a plurality of bottomed spacer forming holes opening in the contact surface and situated in positions corresponding to regions between the beam apertures of the grid;
supplying a pasty spacer forming material to spacer forming hole portions of the molding tool;
rotating the molding tool supplied with the spacer forming material around a rotation axis situated off the molding tool so that air in the spacer forming holes is replaced with the spacer forming material by centrifugal force, thereby filling the spacer forming holes with the spacer forming material;
holding the molding tool with the spacer forming holes filled with the spacer forming material in a manner such that the contact surface is intimately in contact with the surface of the grid and that the spacer forming holes face the regions between the beam apertures of the grid; and
curing the spacer forming material with the molding tool and the grid intimately in contact with each other, thereby forming a plurality of spacers on the surface of the grid.

17. A method of manufacturing a spacer assembly, which comprises a plate-like grid having a plurality of beam apertures and a plurality of columnar spacers set up integrally on both surfaces of the grid and is used in an image display device, the method comprising:
preparing the plate-like grid having the plurality of beam apertures;
preparing two molding tools each having a contact surface and a plurality of bottomed spacer forming holes opening in the contact surface and situated in positions corresponding to regions between the beam apertures of the grid;
supplying a pasty spacer forming material to spacer forming hole portions of the molding tools;
rotating the molding tools supplied with the spacer forming material around a rotation axis situated off the molding tools so that air in the spacer forming holes is replaced with the spacer forming material by centrifugal force, thereby filling the spacer forming holes with the spacer forming material;
holding the molding tools with the spacer forming holes filled with the spacer forming material on the opposite sides of the grid, individually, in a manner such that the contact surfaces are intimately in contact with the surfaces of the grid and that the spacer forming holes face the regions between the beam apertures of the grid; and
curing the spacer forming material with the molding tools and the grid intimately in contact with one another, thereby forming a plurality of spacers individually on the opposite surfaces of the grid.

18. The method of manufacturing a spacer assembly according to claim 16 or 17, wherein the molding tool is rotated with the contact surface extending parallel to the rotation axis and facing the rotation axis side.

19. The method of manufacturing a spacer assembly according to claim 18, wherein partition walls which are situated on the opposite sides of the spacer forming holes with respect to a direction tangent to a circle around the rotation axis are provided on the contact surface so that the spacer forming material can be restrained from flowing out by the partition walls as the molding tool is rotated after the spacer forming material is supplied between the partition walls.

20. A filling device for a spacer forming material, which fills the spacer forming material into a plurality of bottomed spacer forming holes of a molding tool which has a contact surface and the spacer forming holes opening in the contact surface, comprising:
a rotor provided for rotation around a central axis;
a rotating mechanism which rotates the rotor around the rotation axis;
a support member which is provided on the roller and supports the molding tool so that the contact surface of the molding tool faces the rotation axis and that the molding tool is situated off the rotation axis.

21. The filling device for a spacer forming material according to claim 20, wherein the support member has a support portion which supports the molding tool with the contact surface extending parallel to the rotation axis and facing the rotation axis side.

22. The filling device for a spacer forming material according to claim 20 or 21, which comprises partition walls which are provided on the contact surface and situated on the opposite sides of the spacer forming holes with respect to a direction tangent to a circle around the rotation axis, thereby restraining the spacer forming material from flowing out.

23. The filling device for a spacer forming material according to claim 20, which comprises a plurality of said support members provided on the rotor and situated around the rotation axis.

24. A method of manufacturing a spacer assembly, which comprises a plate-like grid having a plurality of beam apertures and a plurality of columnar spacers set up on a surface of the grid and is used in an image display device, the method comprising:
preparing the plate-like grid having the plurality of beam apertures;
preparing a plate-like molding tool having a plurality of spacer forming holes situated in positions corresponding to regions between the beam apertures of the grid;
filling a spacer forming material into the spacer forming holes of the molding tool;
contacting the molding tool filled with the spacer forming material to the surface of the grid in a manner such that the spacer forming holes face the regions between the beam apertures of the grid, thereby forming an assembly composed of the molding tool and the grid;
locating the assembly in an elastically deformable, flat vacuum vessel; and
evacuating the vacuum vessel so that the molding tool and the grid are kept intimately in contact with each other under the atmospheric pressure.

25. The method of manufacturing a spacer assembly according to claim 24, wherein an ultraviolet-curing spacer forming material is used as the spacer forming material, the molding tool and the vacuum vessel are formed of a UV transmitting material, and the spacer forming material is UV-cured by applying ultraviolet rays to the spacer forming material from outside the vacuum vessel with the molding tool and the grid kept intimately in contact with each other in the vacuum vessel.

26. The method of manufacturing a spacer assembly according to claim 24 or 25, wherein a first main wall and a second main wall which constitute the vacuum vessel are individually arranged adjacent and opposite to the assembly, the vacuum vessel is evacuated, and the first and second main walls are pressed against the assembly from both sides to be elastically deformed along the assembly under the atmospheric pressure.

27. The method of manufacturing a spacer assembly according to claim 25, wherein the assembly is taken out of the vacuum vessel after the spacer forming material is UV-cured, and the molding tool is separated from the grid with the cured spacer forming material left on the grid.

28. The method of manufacturing a spacer assembly according to claim 27, wherein the spacer forming material is fired after the molding tool is separated.

29. The method of manufacturing a spacer assembly according to claim 24 or 25, wherein a past containing at least an ultraviolet-curing binder and a glass filler is used as the spacer forming material.

30. A method of manufacturing a spacer assembly, which comprises a plate-like grid having a plurality of beam apertures and a plurality of columnar spacers set up integrally on both surfaces of the grid and is used in an image display device, the method comprising:
preparing the plate-like grid having the plurality of beam apertures;
preparing two plate-like molding tools each having a plurality of spacer forming holes which face regions between the beam apertures of the grid;
filling a spacer forming material into the spacer forming holes of the molding tools;
contacting the two molding tools filled with the spacer forming material to the opposite surfaces of the grid in a manner such that the spacer forming holes face the regions between the beam apertures of the grid, thereby forming an assembly having of the molding tools and the grid;
locating the assembly in an elastically deformable, flat vacuum vessel; and
evacuating the vacuum vessel so that the two molding tools and the grid are kept intimately in contact with one another under the atmospheric pressure.

31. A vacuum vessel used in the method of manufacturing a spacer assembly according to claim 24 or 30, comprising:
a first main wall and a second main wall each in the form of a plate arranged adjacent and opposite to the assembly, the first and second main walls being formed of an elastic material which can be elastically deformed along the assembly to adhere to the assembly when the vacuum vessel is evacuated.

32. The vacuum vessel according to claim 31, which comprises a frame-shaped sidewall set up on a peripheral edge portion of the first main wall and an O-ring provided between an end of the sidewall and the second main wall.

33. The vacuum vessel according to claim 31, which comprises pressure diffuser plates provided individually between the first main wall and the assembly and between the second main wall and the assembly.

34. The vacuum vessel according to claim 31, wherein the first and second main walls individually have rugged inner surfaces opposed to the assembly.

35. The vacuum vessel according to claim 31, wherein the first and second main walls are formed of a material capable of transmitting ultraviolet rays.
